# FASCICULE DE BREVET EUROPEEN

(11) **EP 3 936 733 B1**
(45) Date de publication et mention de la délivrance du brevet: **29.03.2023**
(21) Numéro de dépôt: 21180495.0
(22) Date de dépôt: 20.06.2021
(51) Int. Cl.: F16B 45/02, F16B 2/24

(54) **DISPOSITIF PORTE-MATÉRIEL**
MATERIALHALTERUNGSVORRICHTUNG
EQUIPMENT HOLDER DEVICE

(30) Priorité: 07.07.2020 FR 2007188
(43) Date de publication de la demande: 12.01.2022
(73) Titulaire: Zedel, 38920 Crolles (FR)
(72) Inventeur: CHABOD, Pierre-Olivier, 38530 Pontcharra (FR); TARRAJAT, Jules, 38500 VOIRON (FR); PLAZE, Pierre, 73800 Cruet (FR)
(74) Mandataire: Talbot, Alexandre

(56) Documents cités:
- EP-A1- 1 522 748
- EP-A1- 3 159 048
- DE-A1-102010 023 617
- JP-U- 3 213 129
- Johnston Monte: "Summer OR 2019: Winter Climbing Gear - Black Sheep Adventure Sports", , 6 juillet 2019 (2019-07-06), XP055789170, Extrait de l'Internet: URL:https://blacksheepadventuresports.com/ 2019/07/06/summer-or-2019-winter-climbing- gear/ [extrait le 2021-03-23]

## Description

### Domaine technique

L'invention est relative à un dispositif porte-matériel destiné à être fixé à une ceinture de harnais ou à une sangle.

### Technique antérieure

Lors de travaux acrobatiques, lors de courses en montagnes et dans de nombreuses activités en hauteur, il est courant d'emmener un équipement conséquent. La très grande majorité des harnais est équipée de porte-matériels formées par des boucles textiles éventuellement renforcées par des éléments polymères.

Cependant, il est intéressant de pouvoir adjoindre un ou plusieurs porte-matériels supplémentaire pour pouvoir embarquer de l'équipement additionnel ou dont la configuration est plus adaptée à certains types d'équipements. La demanderesse commercialise de tels portes-matériels présentés dans les documents US 2005/0071961 et EP 3159048. Ces portes-matériels se présentent sous la forme de mousquetons avec un corps définissant un crochet fermé par un doigt.

Il ressort que l'ergonomie de la connexion entre le porte-matériel et la ceinture du harnais est difficile à maitriser. Le document 2005/0071961 propose d'intégrer une patte de blocage dans le volume interne du mousqueton. La longueur de la patte et la largeur de l'espacement entre la patte et le corps définissent un volume de ceinture qui est accepté par le porte-matériel. Lorsque la ceinture est trop volumineuse, l'installation est difficile. Au contraire, lorsque la ceinture est trop fine, le porte-matériel se déplace lorsque l'on introduit ou retire des équipements.

Une problématique similaire existe pour le porte-matériel présenté dans le document EP 3159048.

### Objet de l'invention

Un objet de l'invention consiste en un dispositif porte-matériel qui s'adapte mieux aux différentes configurations de ceintures de harnais et de sangles et qui préférentiellement procure une meilleure gestion de la force de maintien pour les différents volumes de ceintures de harnais et de sangles.

Le dispositif porte-matériel selon la revendication 1 comporte :
- un corps en forme de crochet avec une ouverture,
- un doigt fixé au corps, le doigt est monté mobile par rapport au corps entre une première position fermant l'ouverture et une deuxième position laissant l'ouverture ouverte, le corps et le doigt définissant un anneau,
- une boucle destinée à fixer le corps à une ceinture d'un baudrier ou à une sangle, la boucle étant en partie délimitée par le corps.

Le dispositif porte-matériel est remarquable en ce qu'il comporte un élément filaire installé à glissement à l'intérieur d'un trou traversant du corps, l'élément filaire s'étendant depuis le trou traversant jusqu'à une zone d'appui où une première extrémité de l'élément filaire tire sur le corps,
- un bloqueur configuré pour bloquer l'élément filaire et définir la dimension de la boucle.

Dans un développement, le corps comporte une pluralité de rainures, l'élément filaire s'accrochant dans une de la pluralité des rainures pour définir une hauteur de la boucle.

De manière avantageuse, l'élément filaire forme une boucle, les premier et deuxième brins de la boucle étant séparés par le corps.

Dans une configuration particulière, l'élément filaire définit une boucle terminale à la première extrémité de l'élément filaire, la boucle terminale entourant le corps.

Dans un développement avantageux, la boucle est disposée hors de l'anneau. En alternative, la boucle est disposée dans l'anneau.

Il est également intéressant de prévoir que le bloqueur soit encastré dans le corps.

Préférentiellement, le bloqueur est une came montée à rotation, la came se déplaçant entre une première position autorisant le glissement de l'élément filaire et une deuxième position bloquant l'élément filaire.

Dans une autre configuration, le bloqueur comporte une pièce trouée traversée par l'élément filaire, la pièce trouée formant une déviation pour l'élément filaire et dans lequel la pièce trouée se déplace à l'intérieure du corps entre une première position autorisant le glissement de l'élément filaire et une deuxième position bloquant l'élément filaire, la déviation se déplaçant entre la première position et la deuxième position.

Il est encore avantageux de prévoir que l'élément filaire sorte du trou traversant depuis une paroi externe du corps et prend appui sur la paroi interne du corps ou dans lequel l'élément filaire sort du trou traversant depuis une paroi interne du corps et prend appui sur la paroi externe du corps.

L'invention a également pour objet un procédé de fixation d'un dispositif porte-matériel sur une ceinture de harnais ou une sangle qui permet de mieux s'adapter à la morphologie de la ceinture de harnais ou de la sangle.

Le procédé de fixation d'un dispositif porte-matériel sur une ceinture de harnais ou une sangle comporte les étapes suivantes :
- fournir un dispositif porte-matériel comportant un corps en forme de crochet et un élément filaire monté coulissant sur le corps depuis une zone de coulissement, l'élément filaire étant associé à un bloqueur configuré pour bloquer l'élément filaire,
- installer la ceinture de harnais ou la sangle contre le corps,
- former une boucle autour de la ceinture de harnais ou de la sangle, la boucle étant formée en partie par le corps et en partie par l'élément filaire,
- tirer sur l'élément filaire pour resserrer la boucle et fixer la ceinture de harnais ou la sangle contre le corps.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :

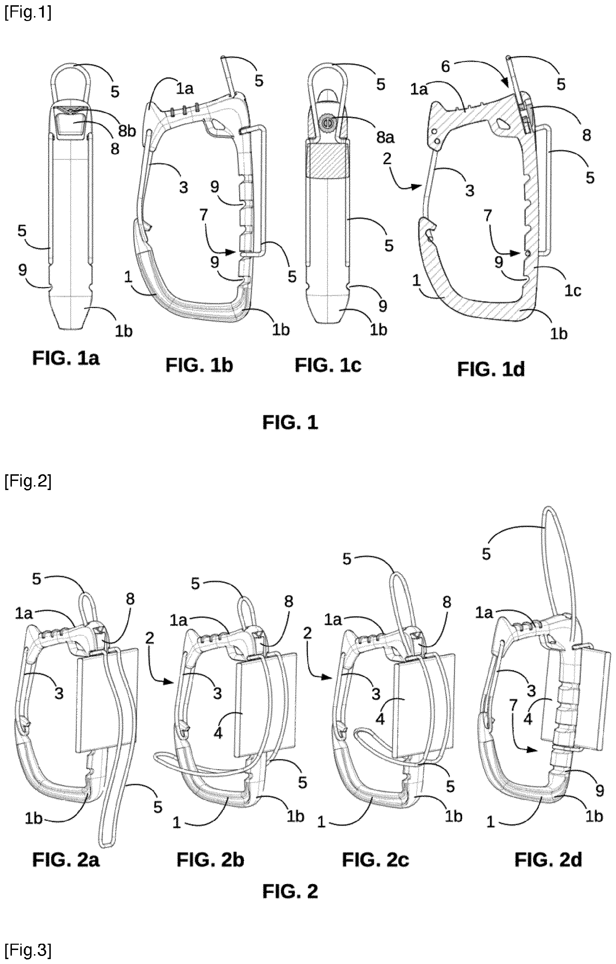

- la figure 1 illustre, de manière schématique, différentes vues d'un premier mode de réalisation d'un dispositif porte-matériel, la figure 1a illustrant une vue de dos, la figure 1b illustrant une vue de côté, la figure 1c illustrant une vue de coupe transversale au niveau du bloqueur d'élément filaire et la figure 1d illustrant une vue de coupe longitudinale ;
- la figure 2 illustre, de manière schématique, différentes étapes d'installation d'une sangle ou d'une ceinture dans la boucle de fixation d'un dispositif porte matériel selon le premier mode de réalisation, les figures 2a, 2b, 2c et 2d représentent quatre étapes consécutives d'installation d'une sangle ou d'une ceinture dans le porte matériel;

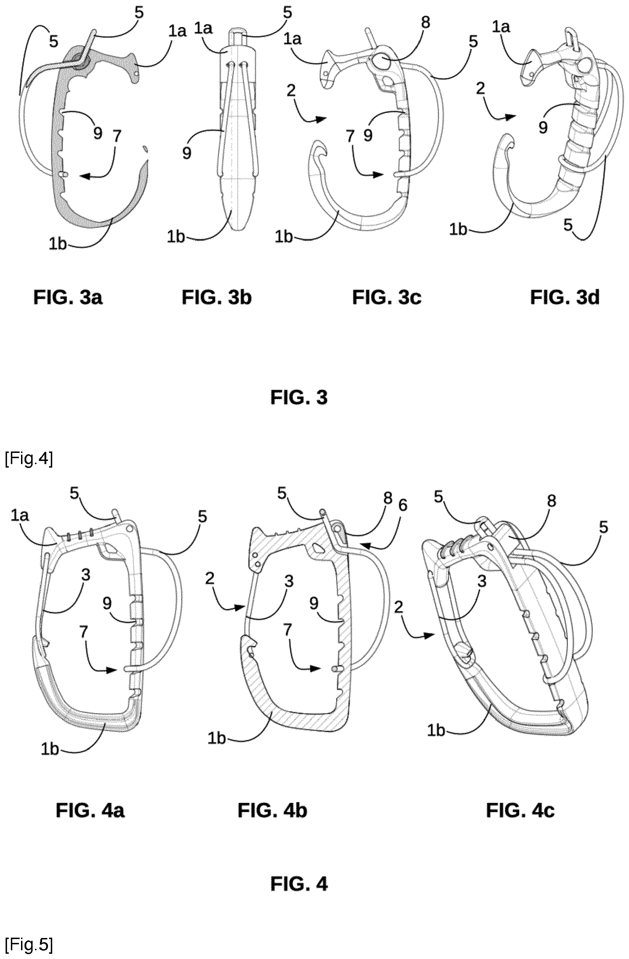

- la figure 3 illustre, de manière schématique, différentes vues d'un deuxième mode de réalisation d'un dispositif porte matériel, la figure 3a illustrant une vue de coupe longitudinale, la figure 3b illustrant une vue de dos, la figure 3c illustrant une vue de côté, la figure 3d illustrant une vue en perspective;
- la figure 4 illustre, de manière schématique, différentes vues d'un troisième mode de réalisation d'un dispositif porte-matériel, la figure 4a illustrant une vue de côté, la figure 4b illustrant une vue de coupe longitudinale, la figure 4c illustrant une vue en perspective ;

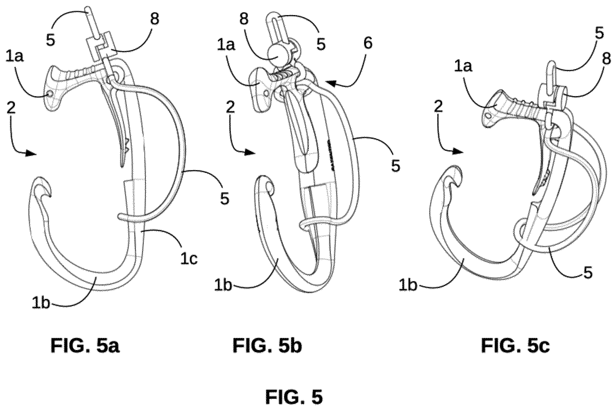

- la figure 5 illustre, de manière schématique, différentes vues d'un quatrième mode de réalisation d'un dispositif porte-matériel, la figure 5a illustrant une vue de côté, la figure 5b illustrant une vue en perspective, la figure 5c illustrant une autre vue en perspective.

### Description des modes de réalisation

Le dispositif porte-matériel comporte un corps 1 en forme de crochet avec une ouverture 2. Le corps 1 est destiné à recevoir et supporter du matériel d'assurage, du matériel d'escalade, du matériel de sécurité. Le corps 1 peut recevoir une ou plusieurs broches à glace, un ou plusieurs mousquetons, un marteau, une ou plusieurs sangles, un outil perforant par exemple un burin. Le corps 1 présente préférentiellement une forme de C avec une partie supérieure 1a, une partie inférieure 1b et une zone de liaison 1c destinée à relier la partie supérieure 1a et la partie inférieure 1b.

Le dispositif porte-matériel comporte un doigt 3 fixé au corps 1. Le doigt 3 est monté mobile par rapport au corps 2 entre une première position fermant l'ouverture 2 et une deuxième position laissant l'ouverture 2 ouverte. Le corps 1 et le doigt 3 définissent un anneau. Le matériel d'assurage, le matériel d'escalade et le matériel de sécurité sont installés dans l'anneau et sont maintenus solidaires dans l'anneau au moyen du doigt 3 qui referme l'anneau. Le fonctionnement du doigt 3 est identique à celui d'un mousqueton conventionnel. Selon les configurations, le doigt 3 peut être fixé à la partie supérieure ou à la partie inférieure du corps 1.

Une boucle est destinée à fixer le corps 1 à une ceinture d'un baudrier ou à une sangle 4. La boucle sert de moyen d'accrochage entre le dispositif porte-matériel et la ceinture ou la sangle 4. La boucle est délimitée en partie par le corps 1 et en partie par un élément filaire 5.

L'élément filaire 5 est installé à glissement à l'intérieur d'un trou traversant 6 du corps 1. Le corps 1 définit un trou traversant 6 et l'élément filaire 5 s'introduit et glisse à l'intérieur du trou traversant 6. L'élément filaire 5 s'étend depuis le trou traversant 6 jusqu'à une zone d'appui 7 où une première extrémité de l'élément filaire 5 tire sur le corps 1.

L'élément filaire 5 possède un premier appui sur le corps 1 dans la zone d'appui 7 et il possède un deuxième appui sur le corps 1 au moyen du trou traversant 6. Lorsqu'un effort en traction est appliqué sur l'élément filaire 5, ce dernier est bloqué, la zone d'appui 7 est imposée et l'élément filaire 5 se tend pour plaquer la ceinture ou la sangle 4 contre le corps 1. En alternative, la zone d'appui 7 glisse le long du corps 1 jusqu'à rencontrer la ceinture ou la sangle 4. Une fois la zone d'appui 7 bloquée, la tension appliquée sur l'élément filaire 5 plaque la ceinture ou la sangle 4 contre le corps 1.

Le dispositif porte-matériel comporte un bloqueur 8 fixé au corps 1 et configuré pour bloquer l'élément filaire 5 et définir la dimension de la boucle. La première zone d'appui 7 de l'élément filaire 5 sur le corps 1 est mobile, c'est-à-dire que la distance entre la zone d'appui 7 et le trou traversant 6 augmente ou se réduit selon la longueur effective de l'élément filaire 5. La première extrémité de l'élément filaire 5 prend appui sur le corps 1 de manière qu'un effort de traction appliqué sur l'élément filaire 5 au-delà du trou traversant 6 permet de réduire l'ouverture de boucle ce qui a pour effet de plaquer la sangle ou la ceinture 4 contre le corps 1. La ceinture ou la sangle 4 est disposée dans la boucle, c'est-à-dire entre le corps 1 et l'élément filaire 5. Le bloqueur 8 permet de maintenir l'effort en traction appliqué sur l'élément filaire 5 pour maintenir la tenue mécanique entre le corps 1 et la ceinture ou la sangle 4 en l'absence de sollicitation par l'utilisateur.

Afin de mieux maitriser la contrainte appliquée par l'élément filaire 5 sur la ceinture ou la sangle 4, il est avantageux que l'élément filaire 5 soit formé par un élément filaire statique ou semi-statique. Par élément filaire statique ou semi-statique, on entend préférentiellement un élément filaire 5 dont l'allongement à la rupture est inférieur ou égal à 5%.

L'élément filaire 5 peut être une sangle ou une corde. Il est préférable que l'élément filaire 5 soit réalisé dans un matériau textile, mais un élément filaire métallique est également possible.

L'utilisation d'un élément filaire 5 monté à glissement dans le corps 1 et avec une première extrémité fixée au corps 1 tout en étant mobile permet de mieux adapter les dimensions de la boucle aux dimensions de la ceinture ou de la sangle 4. L'adaptation de la longueur effective de l'élément filaire 5 aux dimensions de la ceinture ou de la sangle 4 permet une meilleure gestion de l'effort bloquant le corps 1 contre la ceinture ou la sangle 4.

La zone d'appui 7 de la première extrémité de l'élément filaire 5 sur le corps 1 peut être obtenue de différentes manières. Il est possible de prévoir que la première extrémité de l'élément filaire 5 possède une boucle terminale qui entoure le corps 1. La boucle terminale peut être formée par l'élément filaire 5, par exemple au moyen d'un noeud. En alternative, la boucle terminale peut être une boucle réalisée dans un autre matériau. La boucle terminale peut éventuellement être réalisée par un crochet. Cependant, cette configuration est moins avantageuse car le crochet peut se désolidariser lorsque l'élément filaire 5 n'est pas assez sollicité sous traction.

Il est également possible que l'élément filaire 5 se présente sous la forme d'une boucle avec deux brins qui passent autour du corps 1 pour réaliser la prise d'appui et autoriser l'effort en traction plaquant la ceinture 4 contre le corps 1. Ce mode de réalisation particulier est illustré sur les différentes figures. Ce mode de réalisation est privilégié car il n'utilise que l'élément filaire 5 pour prendre appui sur le corps 1.

Lorsque l'élément filaire 5 possède deux brins, il est avantageux de privilégier le mode de réalisation dans lequel les premier et deuxième brins de la boucle sont séparés par le corps 1 comme cela est illustré sur les différentes figures. En séparant les deux brins de la boucle, la prise d'appui est mieux maitrisée. Il ressort également que la connexion mécanique entre le corps 1 et la ceinture et la sangle 4 est améliorée car la ceinture ou la sangle 4 se déforme pour mieux recouvrir les parois latérales du corps 1. Ce mode de réalisation est particulièrement intéressant pour fixer les sangles ou les ceintures de faible épaisseur.

Dans un mode de réalisation particulièrement avantageux, le corps 1 comporte une pluralité de rainures 9. Les rainures 9 sont à des distances différentes du trou traversant 6. Les rainures 9 s'étendent sur la partie intermédiaire 1c.

L'élément filaire 5 s'accroche dans une rainure 9 de la pluralité des rainures 9 pour définir une hauteur de la boucle. L'installation de l'élément filaire 5 dans la rainure 9 permet de fixer la zone d'appui 7. Ce mode de réalisation est très intéressant car il permet de définir la hauteur de la boucle indépendamment de la hauteur de la ceinture ou de la sangle 4 à fixer. Cette configuration permet d'éviter que lors de l'effort de traction appliqué sur l'élément filaire 5, la sangle ou la ceinture 4 se replie sur elle-même ce qui peut être désagréable. La pluralité de rainures 9 peut être utilisée par exemple avec un élément filaire 5 sous la forme d'une boucle ou terminé par une boucle terminale ou un crochet.

Dans une alternative de réalisation non illustrée, les rainures 9 sont remplacées par des trous traversants additionnels dans le corps 1 et préférentiellement dans la partie intermédiaire 1c. La première extrémité de l'élément filaire 5 passe à travers un des trous traversants additionnels pour définir la hauteur de la boucle. Un noeud peut être formé après le trou traversant additionnel pour former la zone d'appui et supporter l'effort en traction. En alternative, un crochet peut passer dans le trou traversant additionnel et prendre appui sur le corps 1. Le crochet peut être remplacer par un autre élément saillant accroché à l'élément filaire. La boucle terminale ou l'élément filaire sous forme de boucle peut faire le tour du corps 1 pour supporter l'effort en traction. Il est également possible que l'élément filaire 5 passe à travers un des trous traversants additionnels et s'accroche dans une rainure du corps pour supporter la contrainte en traction.

Les rainures représentent un mode de réalisation privilégié car il est simple à mettre en oeuvre sur le corps et il est également simple à utiliser et notamment avec des gants.

Dans les différentes configurations illustrées, la boucle de fixation de la ceinture ou sangle 4 sur le corps 1 se situe hors de l'anneau destiné à recevoir le matériel à supporter. Cette configuration permet d'augmenter le volume interne utilisable du crochet défini par le corps 1 en évitant d'encombrer le crochet par la ceinture ou la sangle 4. Dans cette configuration, il est préférable que l'élément filaire 5 sort du trou traversant 6 hors de l'anneau afin de faciliter le glissement de l'élément filaire 5 et donc faciliter l'opération de serrage pour coincer la ceinture ou la sangle 4 entre l'élément filaire 5 et le corps 1. La prise d'appui se fait préférentiellement sur le face interne du corps 1.

Cependant, dans une alternative de réalisation, la boucle peut être disposée dans l'anneau. Il est par exemple possible de modifier le cheminement de l'élément filaire 5 à partir du trou traversant 6 et de déplacer la prise d'appui 7 de la première extrémité de l'élément filaire 5 pour pouvoir coincer la ceinture ou la sangle 4 dans l'anneau.

Le bloqueur 8 est configuré pour bloquer l'élément filaire 5 et définir la dimension de la boucle. Selon les configurations, le bloqueur 8 est fixé au corps 1 ou il est monté indépendant du corps 1. Les figures 1 à 4 illustrent un bloqueur 8 qui est fixé au corps 1. En revanche, la figures 5 illustrent un mode de réalisation où le bloqueur 8 est monté distant du corps 1 et il prend appui sur corps 1 pour maintenir l'effort en traction sur l'élément filaire 5.

Dans le mode de réalisation illustré aux figures 1, 2 et 3, le bloqueur 8 est encastré dans le corps 1. Le corps 1 définit un trou et le bloqueur 8 est installé dans le trou. Il est particulièrement avantageux que le bloqueur soit encastré dans le trou traversant 6 définissant la hauteur de la boucle.

Dans le mode de réalisation illustré à la figure 1, le corps définit un trou en forme de trapèze. Les deux brins de l'élément filaire 5 s'étendent entre la grande base et la petite base. Un élément de blocage 8a est monté mobile entre la grande base et la petite. L'élément de blocage 8a sépare les deux brins. L'élément de blocage 8a est associé à un ressort 8b qui exerce un effort déplaçant l'élément de blocage vers la petite base. Le ressort 8b est configuré pour placer l'élément de blocage dans une position où les deux brins sont coincés entre l'élément de blocage et les parois latérales du corps 1. De manière avantageuse, la portion des brins dirigées vers la zone d'appui 7 sort par la petite base du trapèze. De cette manière, l'effort de traction appliqué sur l'élément filaire a pour effet de déplacer l'élément de blocage vers sa position de blocage et d'augmenter la force de blocage appliquée sur les brins de l'élément filaire. Cette configuration peut également être appliquée à un élément filaire ne comportant qu'un seul brin.

Dans le mode de réalisation illustré aux figures 3a, 3b, 3c et 3d, le bloqueur 8 comporte une pièce trouée traversée par l'élément filaire 5. La pièce trouée forme une déviation pour l'élément filaire 5. Par déviation, on entend que l'orientation de la direction longitudinale change entre un côté de la pièce trouée et l'autre côté de la pièce trouée. La déviation introduit un frottement avec l'élément filaire 5. La pièce trouée est montée mobile dans le trou. Lors de l'application de l'effort de traction sur l'élément filaire 5 pour coincer la ceinture ou la sangle, la pièce trouée se déplace dans un premier sens ce qui autorise le glissement de l'élément filaire 5. Au contraire, lorsque l'effort de traction s'arrête, la pièce trouée se déplace dans un second sens opposé au premier sens et bloque l'élément filaire 5. La déviation se déplace entre la première position autorisant le glissement de l'élément filaire et la deuxième position bloquant l'élément filaire 5. Il est également possible de prévoir que la pièce trouée possède une ouverture dont la section évolue dans le sens transversal. La pièce trouée peut se déplacer dans le trou selon une direction qui passe par les deux faces latérales opposées, c'est-à-dire une direction perpendiculaire au plan de la coupe illustrée à la figure 3a. Le déplacement de la pièce trouée peut se déplacer entre une première position qui autorise le glissement et une deuxième position qui réalise le blocage de l'élément filaire.

Dans le mode de réalisation illustré aux figures 4a, 4b et 4c, le bloqueur 8 est une came montée à rotation, la came se déplaçant entre une première position autorisant le glissement de l'élément filaire 5 et une deuxième position bloquant l'élément filaire 5. La came possède une zone en saillie montée mobile en rotation et qui pince l'élément filaire 5 contre le corps 1 lorsque la came est dans la deuxième position.

Dans le mode de réalisation illustré aux figures 5a, 5b et 5c, l'élément filaire 5 traverse le corps 1 en entrant et en sortant par les parois latérales opposées du corps 1. Dans le mode de réalisation illustré, l'élément filaire est sous la forme d'une boucle et les deux brins entrent dans le trou traversant depuis les deux parois latérales opposées et ressortent pour entrer dans le bloqueur.

Le bloqueur 8 prend appui sur la paroi supérieur du corps 1 pour maintenir l'effort de traction sur l'élément filaire 5. Bien que ce mode de réalisation soit illustré sans rainure ou tout autre moyen permettant de définir la hauteur de la boucle, il est possible d'utiliser les configurations décrites précédemment.

Les figures 2a, 2b, 2c et 2d illustrent des étapes successives de fixation de la ceinture de harnais ou de la sangle 4 contre le corps du dispositif porte-matériel. Comme illustré à la figure 2a, la ceinture de harnais ou la sangle 4 est placée contre le corps 1 ou à proximité du corps. La première extrémité de l'élément filaire 5 est libre. Dans la configuration illustrée, la ceinture de harnais ou la sangle 4 est placée contre la paroi externe du corps 1.

Les figures 2b et 2c illustrent la formation d'une boucle autour de la ceinture de harnais ou de la sangle 4 de manière à solidariser la ceinture de harnais ou la sangle 4 avec le corps. La boucle autour de la ceinture de harnais ou de la sangle 4 est formée en partie par le corps et en partie par l'élément filaire 5.

Dans la configuration illustrée, l'élément filaire 5 se présente sous la forme d'une boucle qui passe à travers l'ouverture 2 en poussant le doigt 3. De cette manière, la première extrémité prend appui contre le corps 1 et forme la zone d'appui 7.

Une force de traction est appliquée sur la seconde extrémité de l'élément filaire pour réduire l'ouverture de la boucle et plaquer la ceinture de harnais ou la sangle 4 contre le corps au moyen de la portion d'élément filaire qui se trouve entre la zone d'appui et la zone de glissement. En d'autres termes, on tire sur l'élément filaire 5 pour resserrer la boucle et fixer la ceinture de harnais ou la sangle 4 contre le corps 1. Le bloqueur 8 bloque l'élément filaire 5 et maintient la ceinture de harnais ou la sangle 4 en position.

Dans la configuration illustrée, la hauteur de la boucle est définie en choisissant dans quelle rainure 9 la première extrémité est bloquée.

Il est alors possible d'avoir un harnais avec un dispositif port-matériel qui est mieux fixer à la ceinture ou à une des sangles du harnais. Le harnais est un avantageusement un harnais pour les travaux en hauteur ou pour la pratique de l'alpinisme, de l'escalade, de la spéléologie.

## Revendications

1. Dispositif porte-matériel comportant :
- un corps (1) en forme de crochet avec une ouverture (2),
- un doigt (3) fixé au corps (1), le doigt (3) est monté mobile par rapport au corps (1) entre une première position fermant l'ouverture (2) et une deuxième position laissant l'ouverture (2) ouverte, le corps (1) et le doigt (3) définissant un anneau,
- une boucle destinée à fixer le corps (1) à une ceinture d'un baudrier ou à une sangle (4), la boucle étant en partie délimitée par le corps (1),
le dispositif porte-matériel étant **caractérisé en ce qu'**il comporte un élément filaire (5) installé à glissement à l'intérieur d'un trou traversant (6) du corps (1), l'élément filaire (5) s'étendant depuis le trou traversant (6) jusqu'à une zone d'appui où une première extrémité de l'élément filaire (5) tire sur le corps (1),
- un bloqueur (8) configuré pour bloquer l'élément filaire (5) et définir la dimension de la boucle.

2. Dispositif porte-matériel selon la revendication 1 dans lequel le corps (1) comporte une pluralité de rainures (9), l'élément filaire (5) s'accrochant dans une de la pluralité des rainures (9) pour définir une hauteur de la boucle.

3. Dispositif porte-matériel selon l'une des revendications 1 et 2 dans lequel l'élément filaire (5) possède des premier et deuxième brins séparés par le corps (1).

4. Dispositif porte-matériel selon l'une quelconque des revendications 1 à 3 dans lequel l'élément filaire (5) définit, en outre, une boucle terminale à la première extrémité de l'élément filaire (5), la boucle terminale entourant le corps (1).

5. Dispositif porte-matériel selon l'une quelconque des revendications 1 à 4 dans lequel la boucle est disposée hors de l'anneau.

6. Dispositif porte-matériel selon l'une quelconque des revendications 1 à 4 dans lequel la boucle est disposée dans l'anneau.

7. Dispositif porte-matériel selon l'une quelconque des revendications 1 à 6 dans lequel le bloqueur (8) est encastré dans le corps (1).

8. Dispositif porte-matériel selon l'une quelconque des revendications 1 à 7 dans lequel le bloqueur (8) est une came montée à rotation, la came se déplaçant entre une première position autorisant le glissement de l'élément filaire (5) et une deuxième position bloquant l'élément filaire (5).

9. Dispositif porte-matériel selon l'une quelconque des revendications 1 à 8 dans lequel le bloqueur (8) comporte une pièce trouée traversée par l'élément filaire (5), la pièce trouée formant une déviation pour l'élément filaire (5) et dans lequel la pièce trouée se déplace à l'intérieure du corps (1) entre une première position autorisant le glissement de l'élément filaire (5) et une deuxième position bloquant l'élément filaire (5), la déviation se déplaçant entre la première position et la deuxième position.

10. Dispositif porte-matériel selon l'une quelconque des revendications 1 à 7 dans lequel l'élément filaire (5) sort du trou traversant (6) depuis une paroi externe du corps (1) et prend appui sur la paroi interne du corps (1) ou dans lequel l'élément filaire (5) sort du trou traversant depuis une paroi interne du corps (1) et prend appui sur la paroi externe du corps 1).

11. Procédé de fixation d'un dispositif porte-matériel sur une ceinture de harnais ou une sangle (4) comportant les étapes suivantes :
- fournir un dispositif porte-matériel comportant un corps (1) en forme de crochet et un élément filaire (5) monté coulissant sur le corps (1) depuis une zone de coulissement, l'élément filaire (5) étant associé à un bloqueur (8) configuré pour bloquer l'élément filaire (5),
- installer la ceinture de harnais ou la sangle (4) contre le corps (1),
- former une boucle autour de la ceinture de harnais ou de la sangle (4), la boucle étant formée en partie par le corps (1) et en partie par l'élément filaire (5),
- tirer sur l'élément filaire (5) pour resserrer la boucle et fixer la ceinture de harnais ou la sangle (4) contre le corps (1).

## Patentansprüche

1. Materialhalterungsvorrichtung, umfassend:
- einen hakenförmigen Körper (1) mit einer Öffnung (2),
- einen am Körper (1) befestigten Finger (3), wobei der Finger (3) in Bezug auf den Körper (1) zwischen einer ersten Position, in der die Öffnung (2) geschlossen wird, und einer zweiten Position, in der die Öffnung (2) offen bleibt, beweglich montiert ist, wobei der Körper (1) und der Finger (3) einen Ring definieren,
- eine Schnalle, die dazu bestimmt ist, den Körper (1) an einem Gürtel eines Klettergeschirrs oder an einem Gurtband (4) zu befestigen, wobei die Schnalle teilweise durch den Körper (1) begrenzt wird, wobei die Materialhalterungsvorrichtung **dadurch gekennzeichnet ist, dass** sie ein drahtförmiges Element (5) umfasst, das im Inneren eines Durchgangslochs (6) des Körpers (1) gleitbeweglich installiert ist, wobei das drahtförmige Element (5) sich vom Durchgangsloch (6) bis zu einem Auflagebereich erstreckt, wo ein erstes Ende des drahtförmigen Elements (5) am Körper (1) zieht,
- eine Blockiervorrichtung (8), die dazu konfiguriert ist, das drahtförmige Element (5) zu blockieren und die Größe der Schnalle zu definieren.

2. Materialhalterungsvorrichtung nach Anspruch 1, wobei der Körper (1) eine Vielzahl von Nuten (9) aufweist, wobei das drahtförmige Element (5) in eine von der Vielzahl von Nuten (9) eingreift, um eine Höhe der Schlaufe zu definieren.

3. Materialhalterungsvorrichtung nach einem der Ansprüche 1 und 2, wobei das drahtförmige Element (5) einen ersten und einen zweiten Strang aufweist, die durch den Körper (1) getrennt sind.

4. Materialhalterungsvorrichtung nach einem der Ansprüche 1 bis 3, wobei das drahtförmige Element (5) außerdem am ersten Ende des drahtförmigen Elements (5) eine Endschlaufe definiert, wobei die Endschlaufe den Körper (1) umgibt.

5. Materialhalterungsvorrichtung nach einem der Ansprüche 1 bis 4, wobei die Schlaufe außerhalb des Rings angeordnet ist.

6. Materialhalterungsvorrichtung nach einem der Ansprüche 1 bis 4, wobei die Schlaufe innerhalb des Rings angeordnet ist.

7. Materialhalterungsvorrichtung nach einem der Ansprüche 1 bis 6, bei der die Blockiervorrichtung (8) im Körper (1) eingebettet ist.

8. Materialhalterungsvorrichtung nach einem der Ansprüche 1 bis 7, wobei die Blockiervorrichtung (8) eine drehbar montierte Nocke ist, wobei die Nocke sich zwischen einer ersten Position, die das Gleiten des drahtförmigen Elements (5) zulässt, und einer zweiten Position bewegt, die das drahtförmige Element (5) blockiert.

9. Materialhalterungsvorrichtung nach einem der Ansprüche 1 bis 8, wobei die Blockiervorrichtung (8) ein gelochtes Teil aufweist, durch welches das drahtförmige Element (5) verläuft, wobei das gelochte Teil eine Umlenkung für das drahtförmige Element (5) bildet, und wobei das gelochte Teil sich innerhalb des Körpers (1) zwischen einer ersten Position, die das Gleiten des drahtförmige Elements (5) zulässt, und einer zweiten Position bewegt, die das drahtförmige Element (5) blockiert, wobei die Umlenkung sich zwischen der ersten Position und der zweiten Position bewegt.

10. Materialhalterungsvorrichtung nach einem der Ansprüche 1 bis 7, wobei das drahtförmige Element (5) ausgehend von einer Außenwand des Körpers (1) aus dem Durchgangsloch (6) austritt und auf der Innenwand des Körpers (1) zur Auflage kommt oder wobei das drahtförmige Element (5) ausgehend von einer Innenwand des Körpers (1) aus dem Durchgangsloch austritt und auf der Außenwand des Körpers (1) zur Auflage kommt.

11. Verfahren zum Befestigen einer Materialhalterungsvorrichtung an einem Gürtel eines Klettergeschirrs oder einem Gurtband (4), umfassend die folgenden Schritte:
- Bereitstellen einer Materialhalterungsvorrichtung mit einem hakenförmigen Körper (1) und einem drahtförmigen Element (5), das von einem Gleitbereich aus gleitbeweglich auf dem Körper (1) montiert ist, wobei das drahtförmige Element (5) mit einer Blockiervorrichtung (8) verbunden ist, die dazu konfiguriert ist, das drahtförmige Element (5) zu blockieren,
- Anlegen des Gürtels des Klettergeschirrs oder des Gurtbands (4) gegen den Körper (1),
- Bilden einer Schlaufe um den Gürtel des Klettergeschirrs oder das Gurtband (4), wobei die Schlaufe teilweise durch den Körper (1) und teilweise durch das drahtförmige Element (5) gebildet wird,
- Ziehen am drahtförmigen Element (5), um die Schlaufe festzuziehen und das Klettergeschirr oder das Gurtband (4) gegen den Körper (1) zu befestigen.

## Claims

1. Gear sling device comprising:
- a body (1) in the form of a hook with an opening (2),
- a gate (3) fixed to the body (1), the gate (3) being fitted movable with respect to the body (1) between a first position closing the opening (2) and a second position leaving the opening (2) open, the body (1) and gate (3) defining a ring,
- a loop designed to attach the body (1) to a belt of a climbing harness or to a strap (4), the loop being partly bounded by the body (1),
the gear sling device being **characterised in that** it comprises a wire-like element (5) fitted sliding inside a through hole (6) of the body (1), the wire-like element (5) extending from the through hole (6) up to a pressing area where a first end of the wire-like element (5) pulls on the body (1),
- a clamp (8) configured to block the wire-like element (5) and to define the size of the loop.

2. Gear sling device according to claim 1 wherein the body (1) comprises a plurality of grooves (9), the wire-like element (5) being secured in one of the plurality of grooves (9) to define a height of the loop.

3. Gear sling device according to one of claims 1 and 2 wherein the wire-like element (5) has first and second strands separated by the body (1).

4. Gear sling device according to any one of claims 1 to 3 wherein the wire-like element (5) further defines a terminal loop at the first end of the wire-like element (5), the terminal loop surrounding the body (1).

5. Gear sling device according to any one of claims 1 to 4 wherein the loop is located outside the ring.

6. Gear sling device according to any one of claims 1 to 4 wherein the loop is located inside the ring.

7. Gear sling device according to any one of claims 1 to 6 wherein the clamp (8) is integrated in the body (1).

8. Gear sling device according to any one of claims 1 to 7 wherein the clamp (8) is a cam mounted in rotation, the cam moving between a first position allowing sliding of the wire-like element (5) and a second position blocking the wire-like element (5).

9. Gear sling device according to any one of claims 1 to 8 wherein the clamp (8) comprises a drilled part through which the wire-like element (5) passes, the drilled part forming a deviation for the wire-like element and wherein the drilled part moves inside the body between a first position allowing sliding of the wire-like element (5) and a second position blocking the wire-like element (5), the deviation moving between the first position and the second position.

10. Gear sling device according to any one of claims 1 to 7 wherein the wire-like element (5) exits from the through hole (6) via an outer wall of the body (1) and presses on the inner wall of the body (1) or wherein the wire-like element exits from the through hole via an inner wall of the body (1) and presses on the outer wall of the body (1).

11. Method for attaching a gear sling device to a harness belt or strap (4) comprising the following steps:
- providing a gear sling device comprising a body (1) in the form of a hook and a wire-like element (5) fitted sliding on the body (1) from a sliding area, the wire-like element (5) being associated with a clamp (8) configured to block the wire-like element (5),
- installing the harness belt or strap (4) against the body (1),
- forming a loop around the harness belt or strap (4), the loop being formed partly by the body (1) and partly by the wire-like element (5),
- pulling on the wire-like element (5) to tighten the loop and fix the harness belt or strap (4) against the body (1).
